# EUROPÄISCHE PATENTSCHRIFT

(11) **EP 1 116 015 B1**
(45) Veröffentlichungstag und Bekanntmachung des Hinweises auf die Patenterteilung: **23.07.2003**
(21) Anmeldenummer: 99948758.0
(22) Anmeldetag: 15.09.1999
(51) Int. Cl.: G01L 3/10

(54) **MECHANISCH-ELEKTRISCHER WANDLER**
MECHANICAL-ELECTRICAL TRANSDUCER
CONVERTISSEUR MECANIQUE-ELECTRIQUE

(30) Priorität: 23.09.1998 DE 19843579
(43) Veröffentlichungstag der Anmeldung: 18.07.2001
(73) Patentinhaber: Siemens Aktiengesellschaft, 80333 München (DE)
(72) Erfinder: IRION, Jürgen, D-65843 Sulzbach (DE); SCHÄFERT, Arthur, D-65824 Schwalbach (DE); THYZEL, Bernd, D-61479 Glashütten (DE); WEBER, Klaus, D-61476 Kronberg (DE)
(86) Internationale Anmeldenummer: EP9906832
(87) Internationale Veröffentlichungsnummer: WO00017617

(56) Entgegenhaltungen:
- EP-A- 0 282 304

## Beschreibung

Die Erfindung betrifft einen mechanisch-elektrischen Wandler, welcher eine Brückenschaltung aufweist, die durch eine elektrische Verschaltung von dehnungsempfindlichen Dickschichtwiderständen über Leitbahnen gebildet ist, wobei die Dickschichtwiderstände unmittelbar auf einem mechanisch auf Torsion zu belastendem metallischen Bauteil angeordnet sind und außerhalb einer für Biegemomente neutralen Faser des zu belastenden Bauteiles liegen, wobei bei Torsion des Bauteiles ein der Dehnung der Dickschichtwiderstände entsprechendes elektrisches Signal abnehmbar ist.

Aus der noch unveröffentlichten deutschen Patentanmeldung 198 14 261.7 ist ein gattungsgemäßer mechanisch-elektrischer Wandler bekannt. Bei diesem Wandler sind die dehnungsempfindlichen Dickschichtwiderstände unmittelbar auf einer als Trägerelement ausgebildeten Welle angeordnet. Die Welle ist dabei einer mechanischer Belastung in Form einer Torsion ausgesetzt, wobei die daraus resultierende Flächendehnung durch den ohne Zwischenträger auf dieser Welle angeordneten Widerstand abgegriffen wird. Die Dickschichtwiderstände sind dabei in Drucktechnik in Form einer Widerstandspaste auf der Welle aufgebracht und nach einer Wärmebehandlung mit dieser innig verbunden.

Ein solcher Drehmomentsensor soll idealer Weise nur Torsionsmomente messen und Biegemomente sowie Zug- und Druckkräfte kompensieren, d. h. im Falle von Biegemomente, Zug- und Druckkräften soll kein elektrisches Signal an der Brückenschaltung ausgegeben werden. Werden die Dickschichtwiderstände der Brückenschaltung außerhalb einer für Biegemomente kräftefreien Zone der Welle angeordnet (neutrale Faser für Biegemomente), besteht die Gefahr, daß bei Biegemomenten ein unerwünschtes Brückensignal erzeugt wird, welches das Sensorsignal verfälscht.

Der Erfindung liegt somit die Aufgabe zu Grunde, einen mechanisch-elektrischen Wandler anzugeben, bei welchem das elektrische Signal mit Hilfe einer Brückenschaltung abgenommen wird, wobei die Erzeugung eines Brückensignales in Folge von Biegemomenten bzw. Zug- und Druckkräften zuverlässig verhindert wird.

Erfindungsgemäß wird die Aufgabe dadurch gelöst, daß mindestens je ein Dickschichtwiderstand eines ersten Zweiges der Brückenschaltung den gleichen Abstand und betragsmäßig den gleichen Winkel zu der neutralen Faser des zu belastenden Bauteiles aufweist, wie der gegenüberliegenden Dickschichtwiderstand des zweiten Zweiges der Brückenschaltung.

Die Erfindung hat den Vorteil, daß die Dickschichtwiderstände beim Auftreten von Biegemomenten ihren Widerstandswert gleichmäßig ändern, wodurch bei Verschaltung zu einer Messbrücke das unerwünschte Signal kompensiert wird. Dies wird mit Hilfe einer biegekompensierten Plazierung der Dickschichtwiderstände erreicht.

Alternativ wird die Aufgabe dadurch gelöst, daß die in einem Brückenzweig angeordneten Dickschichtwiderstände den gleichen Abstand und den betragsmäßig gleichen Winkel zu der neutralen Faser des zu belastenden Bauteiles aufweisen.

In einer Ausgestaltung weist das zu belastende Bauteil auf seiner Oberfläche eine Ausnehmung auf, welche bei mechanischer Beanspruchung des Bauteils in mindestens einem Bereich der Oberfläche des Bauteiles, in welchem die Dickschichtwiderstände positioniert sind, ein betragsmäßig ungleiches Verhältnis von longitudinaler und transversaler Dehnung erzeugt wird.

Durch die Ausnehmung wird das Signalverhalten des Sensors ohne komplexe Änderung der Wellengeometrie einfach erhöht. Ein solcher Sensor ist für die Massenproduktion geeignet, da er kosten- und zeitgünstig herstellbar ist. Aufgrund der Ausnehmung überlagern sich die am Bauteil angreifenden mechanischen Spannungen, wobei die Dehnung in den Hauptrichtungen (longitudinal, transversal) einen ungleichen Betrag aufweisen, was eine Verstärkung des Signalverhaltens des Sensors ermöglicht.

Vorteilhafterweise ist die Ausnehmung als durchgängige Öffnung des Bauteiles ausgebildet.

In einer Weiterbildung ist die Öffnung als Langloch ausgebildet, wobei der erste Dickschichtwiderstand eines Brückenzweiges in der Nähe eines ersten radialen Bereiches des Langloches und der erste Dickschichtwiderstand des zweiten Brückenzweiges in der Nähe eines zweiten radialen Bereiches des Langloches angeordnet ist, wobei der Signalabgriff des Brückenzweiges zwischen den in den verschiedenen radialen Bereichen angeordneten Dickschichtwiderständen erfolgt.

Aufgrund dieser Verschaltung ist einmal gewährleistet, daß die beiden sich im Brückenzweig gegenüberliegenden Dickschichtwiderstände den gleichen Abstand zur neutralen Faser aufweisen und das die Halbbrükkenspannung der beiden Brückenzweige sich unter Biegemomenteeinfluß gleich ändern.

Eine zuverlässige identische Änderung der Biegemomente der Dickschichtwiderstände wird erzielt, wenn die Dickschichtwiderstände beider Brückenzweige in den radialen Bereichen oberhalb oder unterhalb der Längserstreckung des Bauteiles angeordnet sind.

Besonders einfach ist der mechanisch-elektrische Wandler herstellbar, wenn die Dickschichtwiderstände auf einer plan ausgebildeten Oberfläche des aus Stahl oder Stahllegierungen hergestellten Bauteiles angeordnet sind. Da die Dickschichtwiderstände unmittelbar unter Wegfall eines Zwischenträgers auf dem mechanisch zu belastenden Bauteil angeordnet sind, wird die zu detektierende mechanische Belastung direkt von diesem abgegriffen, ohne das Signalverfälschungen durch den Zwischenträger auftreten. Die Herstellung der Dickschichtwiderstände direkt auf den zu belastenden Bauteil reduziert die Herstellungskosten erheblich.

Um den herstellungsbedingten Offset (Nullpunktversatz) innerhalb der Brücke selbst zu minimieren, ist in jedem Brückenzweig ein Dickschichtabgleichwiderstand angeordnet, dessen Widerstandswert kleiner ist als der der Dickschichtwiderstände. Das so gewonnene Ausgangssignal der Brückenschaltung ermöglicht einen hohen Verstärkungsfaktor des dem mechanisch-elektrischen Wandler nachgeschalteten Verstärkers. Gleichzeitig wird im Falle einer Digitalisierung des Meßsignales eine hohe Auflösung des Signals durch einen A/D-Wandler ermöglicht.

Der Dickschichtabgleichwiderstand eines Brückenzweiges weist den gleichen Abstand und den betragsmäßig gleichen Winkel zur neutralen Faser des Bauteiles auf, wie der Dickschichtabgleichwiderstand des anderen Brückenzweiges. Somit wird auch bei den Abgleichwiderständen die Kompensation der Biegemomente durch eine entsprechende Positionierung erreicht.

Vorteilhafterweise besteht ein Dickschichtabgleichwiderstand zur Widerstandsabstufung aus parallel geschalteten Widerstandsbahnen, welche beim Abgleich sequentiell durchtrennt werden.

Ein solcher digitaler Abgleich erfolgt solange, bis der Offset den minimalen, gewünschten Wert erhält. Aufgrund dieser Abgleichmethode wird die Langzeitstabilität des ausgegebenen elektrischen Signales gewährleistet.

Um die Siebauflagefläche und die Verteilung der Kräfte beim Siebdruck möglichst gleichmäßig zu gestalten, weist die Brückenschaltung zur Herstellung in Siebdrucktechnik ein symmetrisches Layout auf. Dabei wird ein möglichst gleicher Widerstandswert für alle zu druckenden Dickschichtwiderstände erreicht, um die Schichtdicke der Dickschichtwiderstände anzugleichen.

Um die Druckgenauigkeit der Widerstandswerte zu verbessern, wird ein streng symmetrisches Layout durch Anordnung von Blindleitungen und/oder Blindwiderständen auf der Oberfläche des Bauteiles erzielt.

Um den mechanisch-elektrischen Wandler insbesondere für sicherheitskritische Anwendungen, wie Lenkhilfen im Kraftfahrzeug zu verwenden, ist oberhalb der Ausnehmung eine erste Brückenschaltung und unterhalb der Ausnehmung eine zweite Brückenschaltung angeordnet.

Die Erfindung läßt zahlreiche Ausführungsformen zu. Eine davon soll anhand der in der Zeichnung dargestellten Figuren näher erläutert werden.

Es zeigt:
- Figur 1:: eine erste Ausführung des erfindungsgemäßen Dickschichtdrehmomentsensors,
- Figur 2:: Dickschichtwiderstand im Schnitt,
- Figur 3:: Spannungsverlauf in der Brückenschaltung,
- Figur 4:: eine zweite Ausführung des Dickschichtdrehmomentsensors,
- Figur 5:: Abgleichschaltung,
- Figur 6:: Drehmomentsensor mit Abgleichwiderständen.

Gleiche Merkmale sind mit gleichem Bezugszeichen gekennzeichnet.

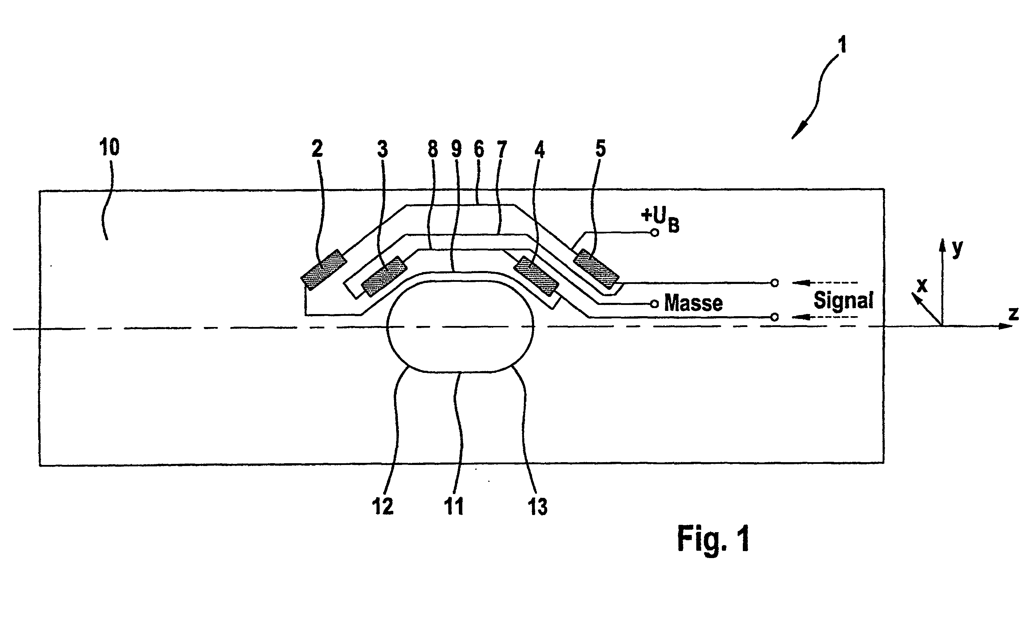

In Figur 1 ist ein Drehmomentsensor für die Anwendung in Lenkhilfesystemen dargestellt. Auf einer auf Torsion zu beanspruchenden Welle 1, welche aus Stahl oder einer Stahllegierung besteht und quaderförmig ausgebildet ist, ist eine Widerstandsbrücke angeordnet, welche aus dehnungsempfindlichen Dickschichtwiderständen 2 bis 5 besteht, die identisch aufgebaut sind. Die Dickschichtwiderstände 2 bis 5 sind durch Leiterbahnen 6 bis 10 elektrisch zu einer Widerstandsmeßbrücke verknüpft.

Wie aus der Draufsicht in Figur 1 ersichtlich, weist die Welle 1 eine rechteckförmige Oberfläche 10 auf, wobei entlang der Längserstreckung (z-Richtung) der Welle 1 mittig ein Langloch 11 ausgebildet ist, welches die Welle 1 vollständig durchsetzt. Das Langloch 11 weist an seinen Enden radiale Bereiche 12 und 13 auf, in welchem bei einer auf die Welle 1 einwirkenden Torsion entlang der dargestellten Mittellinie z zwei Hauptdehnungen unterschiedlichen Betrages an der Oberfläche 10 der Welle 1 auftreten, welche aus Sicht des jeweiligen Dickschichtwiderstandes 2 bis 5 einer longitudinal Dehnung und einer transversalen Dehnung entsprechen.

Im radialen Bereich 12 des Langloches 11 sind die Dickschichtwiderstände 2 und 3, während im radialen Bereich 13 des Langloches 11 die Dickschichtwiderstände 4 und 5 angeordnet sind. Über die Layoutführung der Leiterbahnen wird realisiert, daß die Widerstände 2 und 4 einen Brückenzweig bilden, während die Widerstände 3 und 5 den zweiten Brückenzweig bilden. Dabei geht die Masseleitung 7 an die Widerstände 3 und 4 und die Versorgungsspannung U_{B} (Leitung 6) ist mit den Widerständen 2 und 5 verbunden. Wird die Welle 1 durch Torsion beansprucht, wird an den Leitungen 7 bzw. 9 das Dehnungssignal der Widerstandsmeßbrücke abgenommen.

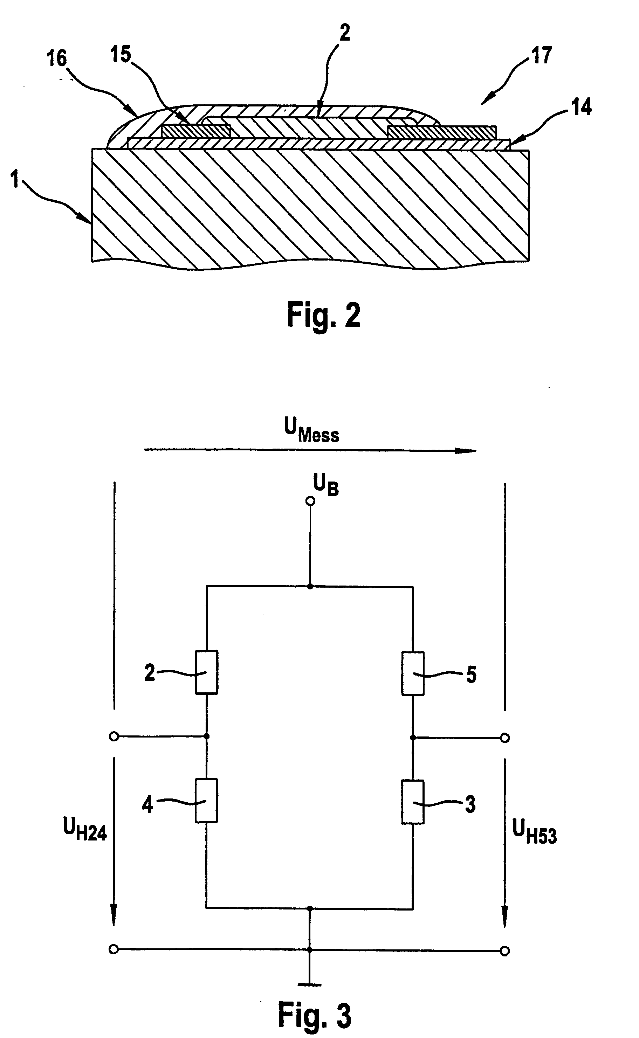

Die Widerstandsbrücke ist in ihrer gesamten Ausdehnung auf einem Dielektrikum 14 angeordnet, welches direkt auf dem Bauteil 1 aufliegt. Ein Schnitt durch einen dehnungsempfindlichen Widerstand ist in Figur 2 dargestellt.

Auf dem Dielektrikum 14 befindet sich die Leiterbahnschicht 15. Zwischen den Anschlüssen der Leiterbahnen ist eine elektrische Widerstandsschicht angeordnet, die den als Dehnungsmeßstreifen ausgebildeten Widerstand 2 bildet. Den Abschluß bildet eine Passivierungsschicht 16, die nur die Kontaktflächen 17 unbedeckt läßt, welche zur elektrischen Kontaktierung des Widerstandes 2 dienen.

Der beschriebene Dehnungsmeßstreifen wird in Dickschichttechnologie unmittelbar auf dem Träger 1 hergestellt.

Um eine innige Verbindung des Dielektrikums 14 mit dem Bauteil 1 herzustellen, wird das Dielektrikum 14 in Drucktechnik mittels einer nichtleitenden Paste auf der Welle 1 aufgetragen. Die Paste enthält dabei eine Glasfritte, die bei geringerer Temperatur schmelzbar ist als das Material der Welle 1. Nach Aufbringen der Paste wird ebenfalls in Siebdrucktechnik eine leitende Schicht aufgebracht, die die Leiterbahnschicht 15 und die Kontaktflächen 17 bildet, auf welcher wiederum die die Widerstände bildende Widerstandsschicht angeordnet ist. Die so vorbereitete Welle 1 wird in einem Hochtemperaturprozess bei einer Temperatur von etwa 750°C bis 900°C wärmebehandelt. Dabei versintert die Glasschicht mit der Oberfläche des Stahls der Welle 1. Bei diesem Aufsintern werden zwischen dem Dielektrikum 2 und der Welle 1 Oxydbrücken gebildet, die eine unlösbare Verbindung zwischen Welle 1 und Dielektrikum 14 gewährleisten, wodurch eine stark innige Verbindung zwischen beiden erreicht wird.

Um die Druckgenauigkeit beim Siebdruck zu verbessern, werden Blindwiderstände 27 und Blindleitungen 28 in das Layout eingearbeitet, um somit die Widerstandstoleranzen bei der Herstellung der Dehnungsmeßstreifen klein zu halten.

Wie aus Figur 1 ersichtlich ist die Widerstandsbrücke längs zur Wellenachse z um das Langloch 11 verschaltet. Die einzelnen Widerstände 2 bis 5 sind paarweise bezüglich der X- und Y-Achse zur neutralen Faser positioniert. Die hinsichtlich Biegemomenten neutrale Faser verläuft bei dieser einfachen Geometrie der quaderförmigen Welle im Zentrum der Welle 1 entlang der Längsausdehnung z. Die Dickschichtwiderstände 3 und 4 besitzen über ihre flächenhafte Längserstreckung an jeden Punkt annähemd den gleichen Abstand und den gleichen Winkel zur neutralen Faser. Dasselbe gilt für die Dickschichtwiderstände 2 und 5, die zwar an einem anderen Ort positioniert sind, aber die selben oben genannten Bedingungen erfüllen. Aufgrund dieser Anordnung ändern sich die Dickschichtwiderstände 2 und 5 bzw. 3 und 4 bei Biegemomenten identisch, wodurch über die Brückenschaltung kein Signal infolge der Biegung angenommen wird.

Der Signalverlauf soll anhand der Figur 3 verdeutlicht werden. Jeder Brückenzweig 2,4 bzw. 3,5 ist sowohl mit einer Versorgungsspannung U _{B} als auch mit Masse verbunden. Zwischen den Dickschichtwiderständen eines Brückenzweiges ist gegenüber Masse eine Halbbrückenspanung U_{H24} bzw. U_{H53} abnehmbar. Die Meßspannung Uₘₑₛₛ , welche die Ausgangsspannung des Drehmomentensensors darstellt, wird zwischen den beiden Halbbrückenspannungen abgegriffen. Bei der im Zusammenhang mit Figur 1 erläuterten Gestaltung des Drehmomentensensors sind die sich in der Brückenschaltung gegenüberliegenden Widerstände 3 und 4 bzw. 2 und 5 jeweils spiegelsymmetrisch zu einer senkrecht zur neutralen Faser verlaufenden Achse angeordnet. Sie haben jeweils den selben Abstand und betragsmäßig den selben Winkel zur neutralen Faser. Dies bewirkt, das sich bei Beanspruchung der Welle 1 auf Biegung die Halbbrükkenspannungen U_{H24} und U_{H53} mit dem gleichen Betrag und dem gleichen Vorzeichen ändern. Da das Meßsignal Uₘₑₛₛ den Spannungunterschied zwischen den beiden Halbbrückenspannungen U_{H24} und U_{H53} darstellt, hat eine Änderung der Halbbrückenspannungen U_{H24} und U_{H53} keinen Einfluß auf das Meßsignal Uₘₑₛₛ.

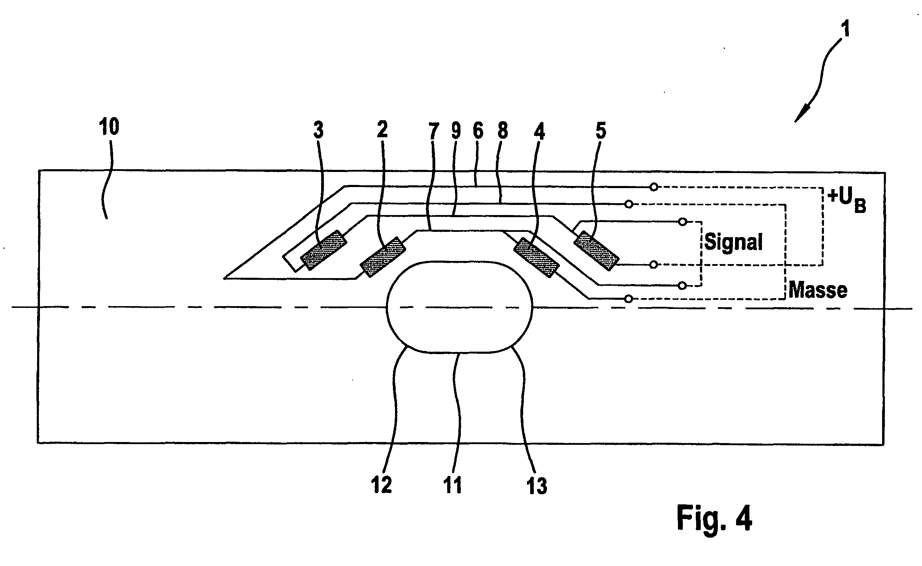

Ein anderes Beispiel für das Layout der Brückenschaltung ist der Figur 4 entnehmbar. Dabei sind die Dickschichtwiderstände 2 und 4 des ersten Brückenzweiges näher am Langloch 11 positioniert, während die Dickschichtwiderstände 3 und 5 des zweiten Brückenzweiges in größerem Abstand zum Langloch angeordnet sind. Durch einen umfangreicheren Aufwand an Leitungsbahnen 6,7,8,9 wird dabei eine symmetrische Anordnung realisiert.

Betrachtet man die Spannungsverhältnisse dieser Ausgestaltung in Hinblick auf Figur 3, so haben die Dickschichtwiderstände 2 und 4 des ersten Brückenzweiges betragsmäßig den gleichen Abstand und den gleichen Winkel zur neutralen Faser. Dasselbe gilt für die Dickschichtwiderstände 3 und 5-des zweiten Brückenzweiges. Wird die Welle 1 mit den so angeordneten Dickschichtwiderständen 2, 3, 4, 5 auf Biegung beansprucht, tritt keine Änderung der Halbbrückenspannungen U_{H24} und U_{H53} auf, so daß auch bei dieser Anordnung das Meßsignal Uₘₑₛₛ durch die Biegung nicht beeinflußt wird.

Infolge der Herstellung der Brückenschaltung mittels eines Siebdruckverfahrens tritt ein Offset des Brückensignals auf, der insbesondere bei kleinen Signalen ein Problem darstellt, da er rund 1000 % des Nutzsignals betragen kann und folglich nur eine geringe Auflösung durch die nachgeschaltete Auswerteelektronik 29 möglich ist. Die Signalauswerteschaltung 29 ist dabei ebenfalls auf dem Dielektrikum 14 der Welle 1 angeordnet.

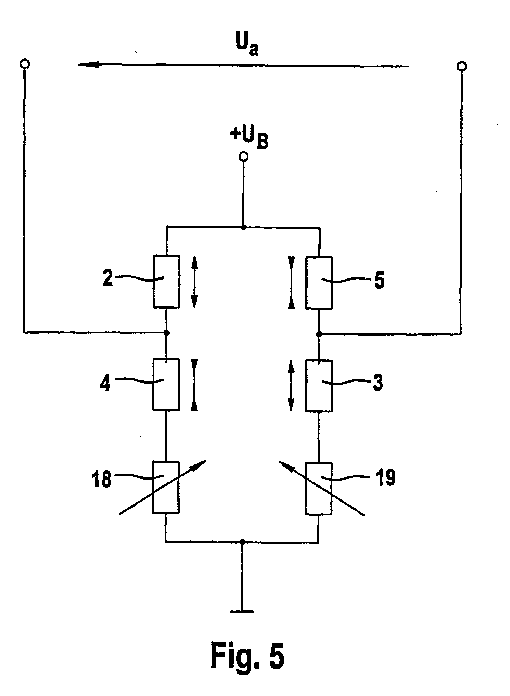

Um eine hohe Verstärkung zu erreichen, wird der herstellungsbedingte Offset (Nullpunktversatz) der Dickschicht-DMS-Brücke innerhalb der Brükke über lasergetrimmte Abgleichwiderstände 18,19 minimiert. Wie aus Figur 5 zu entnehmen ist, ist in jedem Brückenzweig ein Abgleichwiderstand 18, 19 in Reihe zu den Dickschichtwiderständen geschaltet. So befindet sich im ersten Brückenzweig in Reihe zu den Widerständen 2 und 4 der Abgleichwiderstand 18, und im zweiten Brückenzweig ist in Reihe zu den Widerständen 3 und 5 der Abgleichwiderstand 19 geschaltet. Dies hat den Vorteil, daß nicht die Dickschichtwiderstände selbst getrimmt werden, da diese auf Grund ihrer hohen Widerstandswerte einen größeren Einfluß auf das Meßsignal ausüben, was die Langzeitstabilität der Brücke verschlechtert. Die Abgleichwiderstände 18,19 haben einen wesentlich kleineren Widerstandswert als die Dickschichtwiderstände, welche folglich nach der Lasertrimmung die Langzeitstabilität der gesamten Brücke nicht wesentlich beeinflussen können.

In einer vorteilhaften Ausgestaltung sind die Abgleichwiderstände 18,19 entweder flächig oder streifenförmig durch parallel geschaltete Widerstandsbahnen ausgeführt.

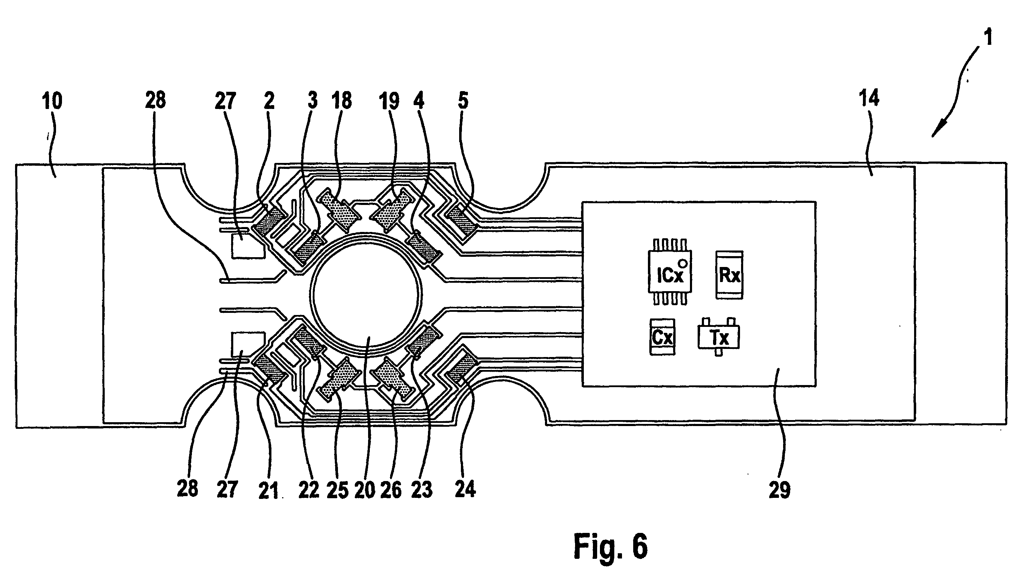

Um die Kompensation der Biegemomente auch bei diesen Abgleichwiderständen 18,19 zu gewährleisten, müssen die Abgleichwiderstände wie die Dickschichtwiderstände 2 bis 5 in einem identischen Abstand und betragsmäßig gleichem Winkel zur neutralen Zone (z-Achse) der Welle 1 plaziert und verschaltet werden. Dies ist aus Figur 6 deutlich zu entnehmen, wo die Abgleichwiderstände 18,19 zwischen den Dickschichtwiderständen 2,3 bzw. 4,5 um die als Bohrung 20 ausgebildete Ausnehmung angeordnet sind.

Um den Drehmomentsensor für sicherheitskritische Anwendungen redundant zu gestalten, kann neben der aus den Widerständen 2 bis 5 bestehenden, oberhalb der Öffnung 20 angeordneten Meßbrücke eine zweite identisch aufgebaute Meßbrücke unterhalb der Bohrung 20 angeordnet sein, welche die Widerstände 21 bis 24 aufweist und die hinsichtlich der neutralen Faser für Biegung dieselben Bedingungen erfüllt, wie die beschriebene Widerstandsmeßbrücke.

## Patentansprüche

1. Mechanisch-elektrischer Wandler, welcher eine Brückenschaltung aufweist, die durch eine elektrische Verschaltung von dehnungsempfindlichen Dickschichtwiderständen mittels Leitbahnen gebildet ist, wobei die Dickschichtwiderstände unmittelbar auf einem mechanisch auf Torsion zu belastenden metallischen Bauteil angeordnet sind und außerhalb der Erstreckungsrichtung einer für Biegemomente neutralen Faser des metallischen Bauteiles verlaufen, wobei bei Torsion des Bauteiles ein der Dehnung der Dickschichtwiderstände entsprechendes elektrisches Signal abnehmbar ist, **dadurch gekennzeichnet, daß** mindestens je ein Dickschichtwiderstand(2;4) eines Zweiges der Brückenschaltung die gleichen Abstände und betragsmäßig den gleichen Winkel zur neutralen Faser (z-Achse) des zu belastenden Bauteiles (1) aufweist, wie ein gegenüberliegender Dickschichtwiderstand (3;5) in dem zweiten Zweig der Brückenschaltung.

2. Mechanisch-elektrischer Wandler welcher eine Brückenschaltung aufweist, die durch eine elektrische Verschaltung von dehnungsempfindlichen Dickschichtwiderständen mittels Leitbahnen gebildet ist, wobei die Dickschichtwiderstände unmittelbar auf einem mechanisch auf Torsion zu belastenden, metallischen Bauteil angeordnet sind und außerhalb der Erstreckungsrichtung einer für Biegemomente neutralen Faser des metallischen Bauteiles verlaufen, wobei bei Torsion des Bauteiles ein der Dehnung der Dickschichtwiderstände entsprechendes elektrisches Signal abnehmbar ist, **dadurch gekennzeichnet, daß** die in einem Brückenzweig angeordneten Dickschichtwiderstände (2,4; 5,3) den gleichen Abstand und betragsmäßig den gleichen Winkel zu der neutralen Faser (z-Achse) aufweisen.

3. Mechanisch-elektrischer Wandler nach Anspruch 1 oder 2, **dadurch gekennzeichnet, daß** das zu belastende Bauteil (1) auf seiner Oberfläche eine Ausnehmung (11) aufweist, welche bei mechanischer Beanspruchung des Bauteiles (1) in mindestens einem Bereich (12,13) der Oberfläche des Bauteiles, in welchem die Dickschichtwiderstände (2,3,4,5) positioniert sind, ein betragsmäßig ungleiches Verhältnis von longitudinaler und transversaler Dehnung erzeugt wird.

4. Mechanisch-elektrischer Wandler nach Anspruch 3, **dadurch gekennzeichnet, daß** die Ausnehmung (11) als durchgängige Öffnung des Bauteiles (1) ausgebildet ist.

5. Mechanisch-elektrischer Wandler nach Anspruch 4, **dadurch gekennzeichnet, daß** die Öffnung (11) als Langloch ausgebildet ist, wobei ein erster Dickschichtwiderstand (3) eines Brückenzweiges (3,5) in der Nähe eines ersten radialen Bereiches (12) des Langloches (11) und der zweite Dickschichtwiderstand (5) des Brückenzweiges (3,5) in der Nähe eines zweiten radialen Bereiches (13) des Langloches (11) angeordnet ist, wobei der Signalabgriff der Brücke (2,4; 3,5) zwischen den in den verschiedenen radialen Bereichen (12, 13) angeordneten Dickschichtwiderständen (3,5) erfolgt.

6. Mechanisch-elektrischer Wandler nach Anspruch 5, **dadurch gekennzeichnet, daß** die Dickschichtwiderstände (2,3,4,5) beider Brückenzweige (2,4; 3,5) in den radialen Bereichen (12,13) oberhalb oder unterhalb des Langloches (11) angeordnet sind.

7. Mechanisch-elektrischer Wandler nach Anspruch 6, **dadurch gekennzeichnet, daß** die Dickschichtwiderstände (2,3,4,5) auf einer plan ausgebildeten Oberfläche des aus Stahl oder einer Stahllegierungen hergestellten Bauteiles (1) angeordnet sind.

8. Mechanisch-elektrischer Wandler nach einem der vorhergehenden Ansprüche, **dadurch gekennzeichnet, daß** in jedem Brückenzweig (2,5; 3,4) ein Dickschichtabgleichwiderstand (18,19) angeordnet ist, dessen Widerstandswert kleiner ist als der der Dickschichtwiderstände (2,3,4,5).

9. Mechanisch-elektrischer Wandler nach Anspruch 8, **dadurch gekennzeichnet, daß** die Dickschichtabgleichwiderstände (18,19) der beiden Brückenzweige (2,4; 3,5) den gleichen Abstand zur neutralen Faser (z-Achse) des Bauteiles (1) besitzen.

10. Mechanisch-elektrischer Wandler nach Anspruch 8 oder 9, **dadurch gekennzeichnet, daß** der Dickschichtabgleichwiderstand (18, 19) zur Widerstandsabstufung aus parallel geschalteten Widerstandsbahnen besteht, welche beim Abgleich sequentiell durchtrennt werden.

11. Mechanisch-elektrischer Wandler nach Anspruch 8, 9 oder 10, **dadurch gekennzeichnet, daß** die Brückenschaltung (2,4; 3,5) zur Herstellung in Siebdrucktechnik ein symmetrisches Layout aufweist.

12. Mechanisch-elektrischer Wandler nach Anspruch 11, **dadurch gekennzeichnet, daß** das symmetrische Layout durch Anordnung von Blindleitungen (28) und/oder Blindwiderständen (27) realisiert ist.

13. Mechanisch-elektrischer Wandler nach einem der vorhergehenden Ansprüche, **dadurch gekennzeichnet, daß** eine erste Brückenschaltung (2,4; 3,5) oberhalb der Ausnehmung (20) und eine zweite Brückenschaltung (21,26; 22,24) unterhalb der Ausnehmung (20) angeordnet ist.

## Claims

1. Mechanical/electrical transducer which has a bridge circuit formed by electrically connecting strain-sensitive thick-film resistors by means of conductor tracks, the thick-film resistors being arranged directly on a metallic component to be subjected mechanically to torsional loading and extending outside the direction of extension of an axis of the metallic component which is neutral with respect to bending moments, it being possible to tap an electrical signal corresponding to the strain of the thick-film resistors when the component is subjected to torsion, **characterized in that** in each case at least one thick-film resistor (2; 4) in one arm of the bridge circuit is at the same distance from and at an angle of the same magnitude to the neutral axis (z axis) of the component (1) to be loaded as an opposite thick-film resistor (3; 5) in the second arm of the bridge circuit.

2. Mechanical/electrical transducer which has a bridge circuit formed by electrically connecting strain-sensitive thick-film resistors by means of conductor tracks, the thick-film resistors being arranged directly on a metallic component to be subjected mechanically to torsional loading and extending outside the direction of extension of an axis of the metallic component which is neutral with respect to bending moments, it being possible to tap an electrical signal corresponding to the strain of the thick-film resistors when the component is subjected to torsion, **characterized in that** the thick-film resistors (2, 4; 5, 3) arranged in one bridge arm are at the same distance from and at an angle of the same magnitude to the neutral axis (z axis).

3. Mechanical/electrical transducer according to Claim 1 or 2, **characterized in that** the component (1) to be loaded has on its surface an aperture (11) which, when the component (1) is mechanically stressed in at least one area (12, 13) of the surface of the component in which the thick-film resistors (2, 3, 4, 5) are positioned, a relationship of unequal magnitude between the longitudinal and the transverse strain is produced.

4. Mechanical/electrical transducer according to Claim 3, **characterized in that** the aperture (11) is designed as a through opening in the component (1).

5. Mechanical/electrical transducer according to Claim 4, **characterized in that** the opening (11) is designed as a slotted hole, a first thick-film resistor (3) of a bridge arm (3, 5) being arranged in the vicinity of a first radial zone (12) of the slotted hole (11), and the second thick-film resistor (5) of the bridge arm (3, 5) being arranged in the vicinity of a second radial zone (13) of the slotted hole (11), the signal being tapped from the bridge (2, 4; 3, 5) between the thick-film resistors (3, 5) arranged in the different radial zones (12, 13).

6. Mechanical/electrical transducer according to Claim 5, **characterized in that** the thick-film resistors (2, 3, 4, 5) of both bridge arms (2, 4; 3, 5) are arranged in the radial zones (12, 13) above or below the slotted hole (11).

7. Mechanical/electrical transducer according to Claim 6, **characterized in that** the thick-film resistors (2, 3, 4, 5) are arranged on a flat surface of the component (1), which is produced from steel or a [sic] steel alloys.

8. Mechanical/electrical transducer according to one of the preceding claims, **characterized in that** a thick-film balancing resistor (18, 19), the resistance value of which is lower than that of the thick-film resistors (2, 3, 4, 5), is arranged in each bridge arm (2, 5; 3, 4).

9. Mechanical/electrical transducer according to Claim 8, **characterized in that** the thick-film balancing resistors (18, 19) of the two bridge arms (2, 4; 3, 5) are at the same distance from the neutral axis (z axis) of the component (1).

10. Mechanical/electrical transducer according to Claim 8 or 9, **characterized in that**, for gradation of the resistance, the thick-film balancing resistor (18, 19) comprises resistance tracks connected in parallel which are severed sequentially during the balancing process.

11. Mechanical/electrical transducer according to Claim 8, 9 or 10, **characterized in that**, for production by screen printing, the bridge circuit (2, 4; 3, 5) has a symmetrical layout.

12. Mechanical/electrical transducer according to Claim 11, **characterized in that** the symmetrical layout is achieved by the arrangement of stub lines (28) and/or reactors (27).

13. Mechanical/electrical transducer according to one of the preceding claims, **characterized in that** a first bridge circuit (2, 4; 3, 5) is arranged above the aperture (20) and a second bridge circuit (21, 26; 22, 24) is arranged below the aperture (20).

## Revendications

1. Convertisseur mécano-électrique, lequel présente un circuit en pont qui est formé par une connexion électrique de résistances à couche épaisse sensibles à l'allongement réalisée au moyen de pistes conductrices, les résistances à couche épaisse étant disposées directement sur un élément métallique devant être soumis mécaniquement à un effort de torsion et s'étendant à l'extérieur de la direction d'extension d'une fibre neutre aux couples de flexion de l'élément métallique, un signal électrique correspondant à l'allongement des résistances à couche épaisse pouvant être capté en cas de torsion de l'élément, **caractérisé en ce qu'**au moins chacune des résistances à couche épaisse (2;4) d'une branche du circuit en pont présente les mêmes distances et, en module, le même angle par rapport à la fibre neutre (axe z) de l'élément (1) devant être sollicité que la résistance à couche épaisse (3;5) située en regard dans la deuxième branche du circuit en pont.

2. Convertisseur mécano-électrique, lequel présente un circuit en pont qui est formé par une connexion électrique de résistances à couche épaisse sensibles à l'allongement réalisée au moyen de pistes conductrices, les résistances à couche épaisse étant disposées directement sur un élément métallique devant être soumis mécaniquement à un effort de torsion et s'étendant à l'extérieur de la direction d'extension d'une fibre neutre aux couples de flexion de l'élément métallique, un signal électrique correspondant à l'allongement des résistances à couche épaisse pouvant être capté en cas de torsion de l'élément, **caractérisé en ce que** les résistances à couche épaisse (2,4; 5,3) disposées dans une branche de pont présentent la même distance et, en module, le même angle par rapport à la fibre neutre (axe z).

3. Convertisseur mécano-électrique selon la revendication 1 ou 2, **caractérisé en ce que** l'élément (1) qui doit être sollicité présente, à sa surface, un évidement (11) qui, en cas de sollicitation mécanique de l'élément (1), produit dans au moins une zone (12,13) de la surface dudit élément, dans laquelle sont positionnées les résistances à couche épaisse (2,3,4,5), un rapport en module inégal d'allongement longitudinal et d'allongement transversal.

4. Convertisseur mécano-électrique selon la revendication 3, **caractérisé en ce que** l'évidement (11) est formé en tant qu'ouverture traversant l'élément (1).

5. Convertisseur mécano-électrique selon la revendication 4, **caractérisé en ce que** l'ouverture (11) est formée en tant que trou oblong, une première résistance à couche épaisse (3) d'une branche de pont (3,5) étant disposée à proximité d'une première zone radiale (12) du trou oblong (11) et la deuxième résistance (5) de la branche de pont (3,5) à proximité d'une deuxième zone radiale (13) du trou oblong (11), le prélèvement du signal du pont (2,4; 3,5) étant réalisé entre les résistances à couche épaisse (3,5) disposées dans les différentes zones radiales (12,13).

6. Convertisseur mécano-électrique selon la revendication 5, **caractérisé en ce que** les résistances à couche épaisse (2,3,4,5) des deux branches de pont (2,4; 3,5) sont disposées dans les zones radiales (12,13) situées au-dessus ou au-dessus du trou oblong (11).

7. Convertisseur mécano-électrique selon la revendication 6, **caractérisé en ce que** les résistances à couche épaisse (2,3,4,5) sont disposées sur une surface plane de l'élément (1) fabriqué en acier ou en alliage d'acier.

8. Convertisseur mécano-électrique selon l'une des revendications précédentes, **caractérisé en ce que** dans chaque branche de pont (2,5; 3,4) est disposée une résistance d'ajustage à couche épaisse (18,19) dont la valeur de résistance est inférieure à celle des résistances à couche épaisse (2,3,4,5).

9. Convertisseur mécano-électrique selon la revendication 8, **caractérisé en ce que** les résistances d'ajustage à couche épaisse (18,19) des deux branches de pont (2,4; 3,5) possèdent la même distance par rapport à la fibre neutre (axe z) de l'élément (1).

10. Convertisseur mécano-électrique selon la revendication 8 ou 9, **caractérisé en ce que** la résistance d'ajustage à couche épaisse (18, 19) destinée à l'échelonnement des résistances se compose de pistes de résistance connectées en parallèle, lesquelles sont séparées de manière séquentielle lors de l'ajustage.

11. Convertisseur mécano-électrique selon la revendication 8, 9 ou 10, **caractérisé en ce que** le circuit en pont (2,4; 3,5) destiné à la fabrication par technique de sérigraphie présente un agencement symétrique.

12. Convertisseur mécano-électrique selon la revendication 11, **caractérisé en ce que** l'agencement symétrique est réalisé par disposition de bras de réactance (28) et/ou de réactances (27).

13. Convertisseur mécano-électrique selon l'une des revendications précédentes, **caractérisé en ce qu'**un premier circuit en pont (2,4; 3,5) est disposé au-dessus de l'évidement (20) et un deuxième circuit en pont (21,26; 22,24) au-dessous de l'évidement (20).
